# EUROPÄISCHE PATENTSCHRIFT

(11) **EP 3 248 362 B1**
(45) Veröffentlichungstag und Bekanntmachung des Hinweises auf die Patenterteilung: **26.12.2018**
(21) Anmeldenummer: 15708780.0
(22) Anmeldetag: 26.02.2015
(51) Int. Cl.: H04L 29/08, H04L 12/721, H04L 12/741

(54) **DATENÜBERTRAGUNG IN EINEM KOMMUNIKATIONSNETZWERK**
DATA TRANSMISSION IN A COMMUNICATIONS NETWORK
TRANSMISSION DE DONNÉES DANS UN RÉSEAU DE COMMUNICATION

(43) Veröffentlichungstag der Anmeldung: 29.11.2017
(73) Patentinhaber: Siemens Aktiengesellschaft, 80333 München (DE)
(72) Erfinder: GÖTZ, Franz-Josef, 91180 Heideck (DE); KLOTZ, Dieter, 90768 Fürth (DE)
(86) Internationale Anmeldenummer: PCT/EP2015/054048
(87) Internationale Veröffentlichungsnummer: WO 2016/134774

(56) Entgegenhaltungen:
- EP-A1- 1 137 225
- EP-A1- 2 538 619
- GB-A- 2 371 439
- US-A1- 2002 087 716

## Beschreibung

Die Erfindung betrifft ein Verfahren zur Datenübertragung in einem Kommunikationsnetzwerk, wobei Metadaten und Nutzdaten enthaltende Datenframes über Punkt-zu-Punkt-Verbindungen zwischen jeweils einem Sender und einem Empfänger gemäß einem Kommunikationsprotokoll übertragen werden.

Unter Metadaten werden hier alle von den Nutzdaten verschiedenen Daten bezeichnet, die ein Datenframe enthält. Metadaten enthalten Steuer- und Protokollinformationen zur Übertragung und Verarbeitung des Datenframe, beispielsweise Adressen des Senders und Empfängers, den Typ und/oder die Länge eines Datenframe. Häufig sind Metadaten eines Datenframe den Nutzdaten vorangestellt und bilden den Kopf (Header) des Datenframe.

Gegenwärtig fordern immer mehr Industriebereiche, insbesondere die Automatisierungs- und Automobilindustrie sowie der Energiebereich, Kommunikationsnetzwerke, die auf Basis eines einzigen standardisierten Protokolls für alle Kommunikationsdienste von der Feldbusebene bis zur Managementebene geeignet sind. Im industriellen Bereich hat sich seit dem Jahr 2000 dabei die Kommunikation auf Basis des Ethernetprotokolls immer mehr durchgesetzt. Aktuell arbeiten Arbeitsgruppen an einer Erweiterung der Ethernetstandards IEEE802.1 und IEEE802.3 (IEEE = Institute of Electrical and Electronics Engineers), der für Kommunikationsdienste in einem einzigen konvergenten so genannten Time-Sensitive Network (TSN) geeignet ist und so genannten Quality of Service (QoS) ermöglicht. Trotz dieser Koexistenz verschiedener Dienste unterschiedlicher Priorität in einem Kommunikationsnetzwerk müssen für Dienste hoher Priorität, z. B. für den so genannten Control-Data Traffic (CD-Traffic), für jeden Pfad zwischen Controller und Device minimale Übertragungszeiten (Low Latency) und ein minimaler Jitter (Low Jitter) garantiert sein. Je höher die Priorität eines Dienstes ist desto kleiner müssen in jedem Netzwerkknoten die Übertragungszeit und der Jitter sein. Der Einfluss von Diensten niedrigerer Priorität auf die Übertragungszeit und den Jitter der Dienste höherer Priorität muss hierbei minimiert werden. Diese weitgehende Rückwirkungsfreiheit ist Voraussetzung für eine effiziente Koexistenz verschiedener Dienste unterschiedlicher Priorität in einem Kommunikationsnetzwerk.

Aktuell diskutiert die so genannte IEEE802.3br Interspersing Express Traffic (IET) Arbeitsgruppe Konzepte für einen zukünftigen Ethernetstandard, der im Zuständigkeitsbereich des Standards IEEE802.3 in einem konvergenten Time-Sensitive Network den Einfluss von Diensten niedrigerer Priorität auf die Übertragungszeit und den Jitter von Diensten höherer Priorität minimiert. Insbesondere sollen Dienste hoher Priorität das Senden von Diensten niedrigerer Priorität durch Präemption unterbrechen können. Dazu werden zwei Prioritätsklassen definiert. Alle Datenframes der Dienste hoher Priorität werden in einer Prioritätsklasse so genannter Express-Frames zusammengefasst. Alle anderen Datenframes werden in einer Prioritätsklasse normaler Datenframes (Non-Express-Frames) zusammengefasst. Zum Senden eines Express-Frame kann die Übertragung eines normalen Datenframe unterbrochen werden.

In der EP 2 538 619 A1 ist bereits ein Verfahren zur Übertragung von Datenframes in einem Ethernet-Automatisierungsnetzwerk beschrieben, wobei die Datenframes mit einer Priorität versehen sind welche die Übertragungsreihenfolge der Frames beeinflusst.

Der Erfindung liegt die Aufgabe zugrunde, ein verbessertes Verfahren zur Datenübertragung in einem Kommunikationsnetzwerk anzugeben, das Übertragungszeit und den Jitter der Übertragung von Datenframes Dienste höherer Priorität reduziert.

Die Aufgabe wird erfindungsgemäß durch die Merkmale des Anspruchs 1 gelöst.

Vorteilhafte Ausgestaltungen der Erfindung sind Gegenstand der Unteransprüche.
Bei dem erfindungsgemäßen Verfahren zur Datenübertragung in einem Kommunikationsnetzwerk werden Metadaten und Nutzdaten enthaltende Datenframes über Punkt-zu-Punkt-Verbindungen zwischen jeweils einem Sender und einem Empfänger gemäß einem Kommunikationsprotokoll übertragen, wobei für jede Punkt-zu-Punkt-Verbindung eine Sendeliste von dem Sender zu dem Empfänger zu übertragender Datenframes geführt wird. Ferner wird eine Prioritätsmenge von wenigstens drei Unterbrechungsprioritäten paarweise verschiedener Wertigkeiten vorgegeben. Das Kommunikationsprotokoll ermöglicht es, jedem Datenframe einer Sendeliste eine Unterbrechungspriorität der Prioritätsmenge zuzuordnen und eine momentane Übertragung eines Datenframe der Sendeliste zu unterbrechen, um ein in der Sendeliste enthaltenes Datenframe, dem eine höhere Unterbrechungspriorität als dem momentan übertragenen Datenframe zugeordnet ist, zu übertragen.
Dabei wird eine erste Unterbrechungspriorität als höher als eine zweite Unterbrechungspriorität bezeichnet, wenn sie eine höhere Wertigkeit als die zweite Unterbrechungspriorität aufweist. Die Wertigkeit definiert eine Totalordnung auf der Prioritätsmenge.
Eine Sendeliste kann in Teilsendelisten aufgeteilt sein, die beispielsweise jeweils Datenframes gleicher Unterbrechungspriorität aufweisen.
Das erfindungsgemäße Verfahren ermöglicht somit, die Übertragung von Datenframes in Abhängigkeit von ihrer Unterbrechungspriorität zu unterbrechen. Genauer kann die Übertragung eines Datenframe einer Sendeliste zugunsten der Übertragung jedes anderen in dieselbe Sendeliste aufgenommenen Datenframe, dem eine höhere Unterbrechungspriorität als dem momentan übertragenen Datenframe zugeordnet ist, unterbrochen werden, wobei wenigstens drei verschiedene Unterbrechungsprioritäten vorgesehen sind. Dadurch können Dienste verschiedener Unterbrechungsprioritäten definiert werden, so dass ein Datenframe umso bevorzugter übertragen wird, je höher die Unterbrechungspriorität des zugehörigen Dienstes ist. Dies ermöglicht insbesondere, die mittleren Übertragungszeiten und Jitter der Datenframes von Diensten umso mehr zu reduzieren, je höher die Unterbrechungspriorität des jeweiligen Dienstes ist. Da wenigstens drei verschiedene Unterbrechungsprioritäten vorgesehen sind, können die Unterbrechungsprioritäten sehr flexibel den jeweiligen Anforderungen angepasst werden. Dadurch eignet sich das erfindungsgemäße Verfahren insbesondere vorteilhaft für Time-Sensitive Networking für Dienste, die eine Übertragung von Datenframes mit sehr geringer Übertragungslatenz und hoher Verfügbarkeit erfordern.

Die Erfindung sieht vor, dass zwischen dem Sender und dem Empfänger einer Punkt-zu-Punkt-Verbindung der Punkt-zu-Punkt Verbindungen vereinbart wird, wie viele verschiedene Unterbrechungsprioritäten für die Sendeliste der Punkt-zu-Punkt-Verbindung zur Verfügung gestellt werden.
Diese Ausgestaltung der Erfindung berücksichtigt die Möglichkeit, dass der Sender und der Empfänger einer Punkt-zu-Punkt-Verbindung unterschiedlich viele verschiedene Unterbrechungsprioritäten unterstützen. Für einen solchen Fall ist daher vorgesehen, dass zwischen dem Sender und dem Empfänger einer Punkt-zu-Punkt-Verbindung vor der Übertragung von Datenframes die Anzahl der verwendbaren Unterbrechungsprioritäten vereinbart wird. Insbesondere umfasst diese Ausgestaltung die Möglichkeit, dass zwischen einem Sender und einem Empfänger vereinbart wird, dass die Übertragung von Datenframes nie unterbrochen wird, falls der Sender oder der Empfänger Übertragungsunterbrechungen nicht unterstützt.
Eine weitere Ausgestaltung der Erfindung sieht vor, dass das Kommunikationsprotokoll ermöglicht, dass die Nutzdaten eines in einer Sendeliste enthaltenen Datenframe, dem eine Unterbrechungspriorität zugeordnet ist, die kleiner als die höchste in der Prioritätsmenge enthaltene Unterbrechungspriorität ist, vor der Übertragung des Datenframe auf Teildatenframes aufgeteilt werden und die Teildatenframes des Datenframe nacheinander übertragen werden. Bei dieser Ausgestaltung wird ermittelt, ob die Übertragung des Datenframe zu unterbrechen ist, indem vor dem Senden eines Teildatenframe des Datenframe jeweils geprüft wird, ob die Sendeliste ein Datenframe enthält, dem eine höhere Unterbrechungspriorität als dem Datenframe dieses Teildatenframe zugeordnet ist. Dabei weist jedes Teildatenframe vorzugsweise eine Framelänge von mindestens 64 Byte auf.

Diese Ausgestaltung ermöglicht vorteilhaft eine relativ einfach implementierbare Realisierung von Unterbrechungen der Übertragung von Datenframes durch eine Zerlegung (Fragmentierung) eines Datenframe in Teildatenframes, vor deren Übertragung jeweils geprüft wird, ob ein Datenframe einer höheren Unterbrechungspriorität zu senden ist. Teildatenframes einer Framelänge von mindestens 64 Byte sind insbesondere dann vorteilhaft und bevorzugt, wenn das Kommunikationsnetzwerk als ein Ethernet-Netzwerk ausgebildet ist, da Ethernet-Protokolle üblicherweise eine Framelänge von mindestens 64 Byte vorsehen.

Eine weitere Ausgestaltung der Erfindung sieht vor, dass das Kommunikationsprotokoll es ermöglicht, die Übertragung eines Datenframe einer Sendeliste zu unterbrechen, wenn während der Übertragung des Datenframe ein Datenframe, dem eine höhere Unterbrechungspriorität als dem momentan übertragenen Datenframe zugeordnet ist, in die Sendeliste aufgenommen wird. Vorzugsweise wird dabei eine Mindestrestbyteanzahl vorgegeben und die Übertragung eines Datenframe einer Sendeliste wird nur dann unterbrochen, wenn eine noch nicht übertragene Anzahl von Nutzdatenbytes des Datenframe die vorgegebene Mindestrestbyteanzahl überschreitet. Ferner wird vorzugsweise bei einer Unterbrechung der Übertragung eines Datenframe einer Sendeliste ein Teildatenframe, das die noch nicht übertragenen Nutzdaten des Datenframe enthält, gebildet und in die Sendeliste aufgenommen.

Bei dieser Ausgestaltung der Erfindung werden im Unterschied zu der vorgenannten Ausgestaltung Datenframes nicht unabhängig von weiteren von einem Sender zu sendenden Datenframes in Teildatenframes zerlegt, sondern nur dann, wenn tatsächlich ein von dem Sender zu sendendes Datenframe vorliegt, dem eine höhere Unterbrechungspriorität als dem momentan übertragenen Datenframe zugeordnet ist. Gegenüber der vorgenannten Ausgestaltung hat dies den Vorteil, dass übertragene Datenframes nur bedarfsweise fragmentiert werden, so dass die Übertragungszeit von Datenframes im Durchschnitt gegenüber der vorgenannten Ausgestaltung reduziert wird. Allerdings erfordert dies eine ständige Überwachung des Eingangs weiterer von dem Sender zu sendender Datenframes und die Implementierung einer bedarfsweisen Unterbrechung der Übertragung eines Datenframe. Die Einschränkung der Unterbrechung einer Übertragung eines Datenframe auf den Fall, dass eine noch nicht übertragene Anzahl von Nutzdatenbytes des Datenframe eine Mindestrestbyteanzahl überschreitet, verhindert vorteilhaft unnötigen Aufwand zur Unterbrechung der Übertragung eines bereits fast vollständig übertragenen Datenframe.

Eine weitere Ausgestaltung der Erfindung sieht vor, dass die Metadaten jedes Datenframe, dem eine Unterbrechungspriorität zugeordnet ist, die kleiner als die höchste in der Prioritätsmenge enthaltene Unterbrechungspriorität ist, die dem Datenframe zugeordnete Unterbrechungspriorität und eine das Datenframe charakterisierende Framenummer enthalten. Falls ein Datenframe in Teildatenframes aufgeteilt wird, enthält jedes Teildatenframe eines Datenframe vorzugsweise Metadaten, welche die dem Datenframe zugeordnete Unterbrechungspriorität, eine das Datenframe charakterisierende Framenummer und eine Anzahl noch nicht gesendeter Nutzdatenbytes des Datenframe enthalten.

Diese Ausgestaltungen der Erfindung ermöglichen es einerseits, den Metadaten eines Datenframe dessen Unterbrechungspriorität zu entnehmen. Ferner ermöglichen sie es, Datenframes nicht maximaler Unterbrechungspriorität durch verschiedene Framenummern voneinander zu unterscheiden sowie zu demselben derartigen Datenframe gehörende Teildatenframes durch eine gemeinsame Framenummer zu kennzeichnen, so dass der Empfänger sie zu dem Datenframe zusammensetzen kann. Die Angabe der Anzahl noch nicht gesendeter Nutzdatenbytes des Datenframe in den Metadaten eines Teildatenframe ermöglicht es dem Empfänger der Teildatenframes zu erkennen, ob bzw. wann er sämtliche Teildatenframes eines Datenframe und damit dieses Datenframe vollständig empfangen hat.

Eine weitere Ausgestaltung der Erfindung sieht vor, dass eine für Teildatenframes reservierte Multicastadresse vorgegeben wird und die Metadaten jedes auf ein erstes Teildatenframe folgenden Teildatenframe diese vorgegebene Multicastadresse als eine Zieladresse enthalten.

Diese Ausgestaltung der Erfindung ermöglicht es dem Empfänger zu erkennen, ob ein empfangenes Teildatenframe das erste Teildatenframe eines fragmentierten Datenframe ist oder nicht.

Bei den beiden vorgenannten Ausgestaltungen der Erfindung ermittelt ein Empfänger eines in Teildatenframes aufgeteilten Datenframe vorzugsweise anhand der Metadaten der von ihm empfangenen Teildatenframes, ob er alle Teildatenframes eines Datenframe empfangen hat, indem er die Gesamtanzahl der Nutzdatenbytes aller von ihm empfangenen Teildatenframes, deren Metadaten dieselbe Framenummer enthalten, ermittelt und mit der Gesamtanzahl der Nutzdatenbytes des Datenframe vergleicht. Ferner setzt der Empfänger die von ihm empfangenen Teildatenframes, deren Metadaten dieselbe Framenummer enthalten, zu einem Datenframe zusammen, nachdem er alle Teildatenframes eines Datenframe empfangen hat.

Diese Ausgestaltung ermöglicht es dem Empfänger vorteilhaft, die in den Metadaten der Teildatenframes enthaltenen Informationen zu verwenden, um Teildatenframes zu vollständigen Datenframes zusammenzusetzen.

Vorzugsweise wird das erfindungsgemäße Verfahren in einem Kommunikationsnetzwerk, das als ein Ethernet-Netzwerk ausgebildet ist, verwendet.

Diese Verwendung des erfindungsgemäßen Verfahrens ist besonders bevorzugt, da Ethernet-Netzwerke insbesondere für Anwendungen mit Diensten eingesetzt werden, die eine Übertragung von Datenframes mit sehr geringer Übertragungslatenz und hoher Verfügbarkeit erfordern, für die sich das erfindungsgemäße Verfahren besonders eignet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 einen zeitlichen Verlauf einer Übertragung von fünf Datenframes,
FIG 2 die Struktur und das Versenden eines Express-Frame,
FIG 3 die Struktur und das Versenden eines Non-Express-Frame, das nicht in Teildatenframes aufgeteilt wird,
FIG 4 die Struktur und das Versenden Non-Express-Frame, das in drei Teildatenframes aufgeteilt wird,
FIG 5 Datenfelder eines Präemptionstag eines Non-Express-Frame,
FIG 6 den Empfang eines ohne Unterbrechung gesendeten Non-Express-Frame, das nicht in Teildatenframes aufgeteilt wurde,
FIG 7 den Empfang eines Non-Express-Frame, das in drei Teildatenframes aufgeteilt wurde,
FIG 8 ein Ablaufdiagramm einer ersten Unterbrechungsvariante, und
FIG 9 ein Ablaufdiagramm einer zweiten Unterbrechungsvariante.

Einander entsprechende Teile sind in allen Figuren mit den gleichen Bezugszeichen versehen.

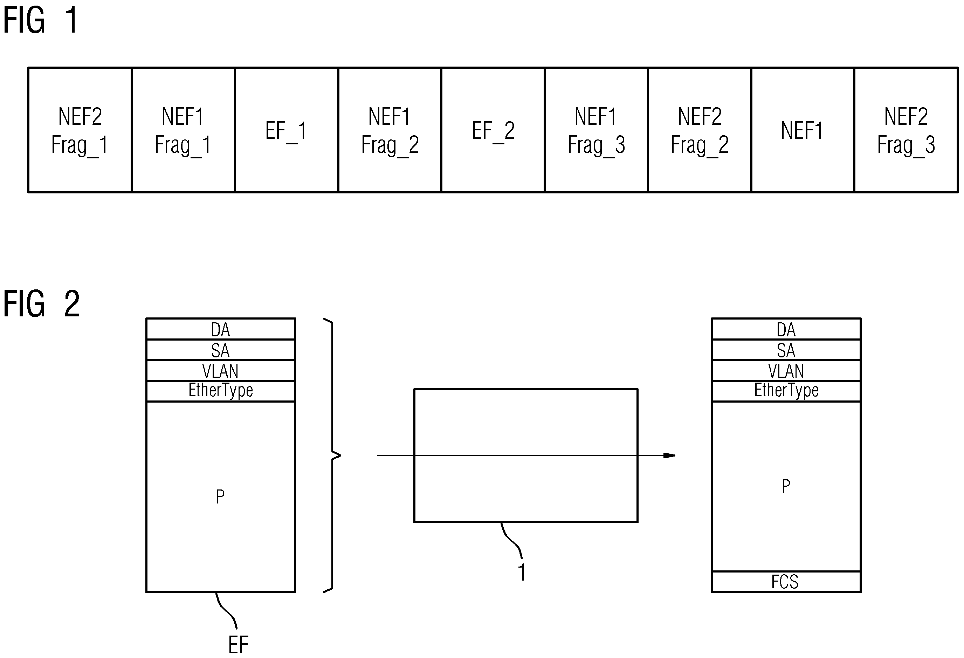

Figur 1 zeigt beispielhaft einen zeitlichen Verlauf einer Übertragung von fünf jeweils Metadaten und Nutzdaten enthaltenden Datenframes über eine Punkt-zu-Punkt-Verbindung von einem Sender zu einem Empfänger eines Kommunikationsnetzwerks gemäß einem Kommunikationsprotokoll. Das Kommunikationsnetzwerk ist als ein Ethernet-Netzwerk ausgebildet. Entsprechend ist das Kommunikationsprotokoll ein Ethernet-Protokoll und die Datenframes sind Ethernet-Frames. Jedem Datenframe einer Sendeliste des Senders wird eine Unterbrechungspriorität einer vorgegebenen Prioritätsmenge von wenigstens drei Unterbrechungsprioritäten paarweise verschiedener Wertigkeiten zugeordnet. Datenframes, denen die höchste in der Prioritätsmenge enthaltene Unterbrechungspriorität zugeordnet ist, werden als Express-Frames bezeichnet. Alle anderen Datenframes werden als Non-Express-Frames bezeichnet.

Die Übertragung eines Non-Express-Frame der Sendeliste wird gemäß dem Kommunikationsprotokoll unterbrochen, wenn während der Übertragung ein Datenframe in die Sendeliste aufgenommen wird, dem eine höhere Unterbrechungspriorität als dem momentan übertragenen Non-Express-Frame zugeordnet ist, sofern eine noch nicht übertragene Anzahl von Nutzdatenbytes des Non-Express-Frame eine Mindestrestbyteanzahl, die beispielsweise als 44 Byte vorgegeben wird, überschreitet.

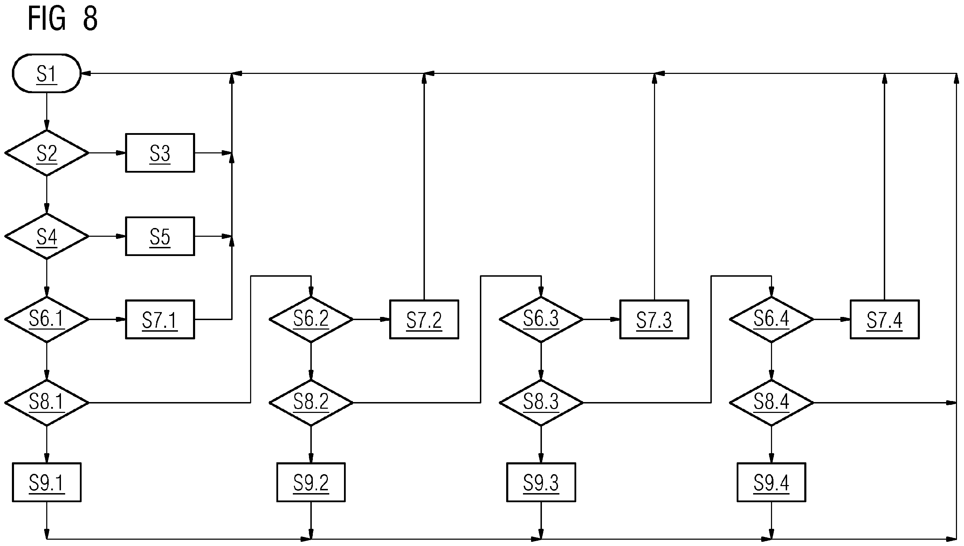

Dazu sieht eine erste Unterbrechungsvariante vor, die Nutzdaten jedes in einer Sendeliste enthaltenen Non-Express-Frame, das mehr Nutzdatenbytes als eine vorgegebene Mindestbyteanzahl, beispielsweise mehr als 88 Byte, enthält, vor der Übertragung des Non-Express-Frame auf Teildatenframes aufzuteilen, die nacheinander übertragen werden. Vor dem Senden eines Teildatenframe des Non-Express-Frame wird jeweils geprüft, ob die Sendeliste ein Datenframe enthält, dem eine höhere Unterbrechungspriorität als dem Non-Express-Frame dieses Teildatenframe zugeordnet ist. Sollte die Sendeliste ein derartiges Datenframe enthalten, wird die Übertragung des Teildatenframe zurückgestellt und damit begonnen, dieses Datenframe zu übertragen (siehe dazu Figur 8).

Alternativ dazu sieht eine zweite Unterbrechungsvariante vor, die Non-Express-Frames der Sendeliste nicht bereits vor deren Übertragung in Teildatenframes aufzuteilen, sondern erst dann, wenn während der Übertragung eines Non-Express-Frame ein Datenframe, dem eine höhere Unterbrechungspriorität als dem momentan übertragenen Non-Express-Frame zugeordnet ist, in die Sendeliste aufgenommen wird, sofern die noch nicht übertragene Anzahl von Nutzdatenbytes des Non-Express-Frame die Mindestrestbyteanzahl überschreitet. In diesem Fall wird die Übertragung des Non-Express-Frame unterbrochen, ein Teildatenframe, das die noch nicht übertragenen Nutzdaten des Non-Express-Frame enthält, gebildet und in die Sendeliste aufgenommen, und es wird mit der Übertragung des Datenframe mit der höheren Unterbrechungspriorität begonnen.

Express-Frames werden dagegen immer ohne eine Unterbrechung übertragen.

In Figur 1 bezeichnen EF_1 und EF_2 ein erstes Express-Frame und ein zweites Express-Frame, NEF2 Frag_1, NEF2 Frag__2 und NEF2 Frag_3 bezeichnen drei verschiedene Teildatenframes eines ersten Non-Express-Frame, dem die dritthöchste in der Prioritätsmenge enthaltene Unterbrechungspriorität zugeordnet ist, NEF1 Frag_1, NEF1 Frag_2 und NEF1 Frag_3 bezeichnen drei verschiedene Teildatenframes eines zweiten Non-Express-Frame, dem die zweithöchste in der Prioritätsmenge enthaltene Unterbrechungspriorität zugeordnet ist, und NEF1 bezeichnet ein drittes Non-Express-Frame, dem ebenfalls die zweithöchste in der Prioritätsmenge enthaltene Unterbrechungspriorität zugeordnet ist.

Zunächst wird ein erstes Teildatenframe NEF2 Frag_1 des ersten Non-Express-Frame übertragen. Die Übertragung des ersten Non-Express-Frame wird zur Übertragung des zweiten Non-Express-Frame unterbrochen. Daher wird anschließend ein erstes Teildatenframe NEF1 Frag_1 des zweiten Non-Express-Frame übertragen. Die Übertragung des zweiten Non-Express-Frame wird anschließend zur Übertragung des ersten Express-Frame EF_1 unterbrochen. Nach der Übertragung des ersten Express-Frame EF_1 wird die dadurch unterbrochene Übertragung des zweiten Non-Express-Frame fortgesetzt, indem ein zweites Teildatenframe NEF1 Frag_2 des zweiten Non-Express-Frame übertragen wird. Die Übertragung des zweiten Non-Express-Frame wird danach zur Übertragung des zweiten Express-Frame EF_2 abermals unterbrochen. Nach der Übertragung des zweiten Express-Frame EF_2 wird die dadurch unterbrochene Übertragung des zweiten Non-Express-Frame fortgesetzt, indem das dritte und letzte Teildatenframe NEF1 Frag_3 des zweiten Non-Express-Frame übertragen wird. Anschließend wird die unterbrochene Übertragung des ersten Non-Express-Frame fortgesetzt, indem ein zweites Teildatenframe NEF2 Frag_2 des ersten Non-Express-Frame übertragen wird. Die Übertragung des ersten Non-Express-Frame wird danach zur Übertragung des dritten Non-Express-Frame NEF1 abermals unterbrochen. Das dritte Non-Express-Frame NEF1 wird nicht in Teildatenframes aufgeteilt und ohne Unterbrechung übertragen, beispielsweise weil es im Fall der Verwendung der ersten Unterbrechungsvariante nicht mehr Nutzdatenbytes als die vorgegebene Mindestbyteanzahl enthält oder weil im Fall der Verwendung der zweiten Unterbrechungsvariante während der Übertragung des dritten Non-Express-Frame NEF1 kein Express-Frame in die Sendeliste aufgenommen wird. Nach der Übertragung des dritten Non-Express-Frame NEF1 wird die Übertragung des ersten Non-Express-Frame fortgesetzt und durch die Übertragung des dritten und letzten Teildatenframe NEF2 Frag_3 des ersten Non-Express-Frame abgeschlossen.

Das Kommunikationsprotokoll unterscheidet sich von bekannten Ethernet-Protokollen dadurch, dass es Multi-Level-Präemption der Übertragung von Datenframes ermöglicht. Unter dieser Multi-Level-Präemption wird die oben beschriebene Unterbrechung der Übertragung eines Non-Express-Frame zum Zweck der Übertragung eines Express-Frame oder eines Non-Express-Frame, dem eine höhere Unterbrechungspriorität als dem momentan übertragenen Non-Express-Frame zugeordnet ist, verstanden. In Figur 1 wurde vorausgesetzt, dass sowohl der Sender als auch der Empfänger der Punkt-zu-Punkt-Verbindung diese Multi-Level-Präemption unterstützen. Ob und inwieweit der Sender und der Empfänger einer Punkt-zu-Punkt-Verbindung Multi-Level-Präemption unterstützen, wird zwischen dem Sender und dem Empfänger vor der Übertragung von Datenframes geklärt, beispielsweise mittels eines Negotiation-Protokolls wie des Link Layer Discovery Protocol (LLDP). Sollte sich dabei herausstellen, dass der Sender oder der Empfänger Multi-Level-Präemption nicht unterstützen, werden Datenframes von dem Sender ohne Multi-Level-Präemption zu dem Empfänger übertragen. In dem Fall, dass sowohl der Sender als auch der Empfänger Multi-Level-Präemption unterstützen, klären der Sender und der Empfänger vor der Übertragung von Datenframes insbesondere untereinander, wie viele verschiedene Unterbrechungsprioritäten für die Multi-Level-Präemption zur Verfügung gestellt werden und in wie viele Teildatenframes ein Non-Express-Frame bei der Multi-Level-Präemption maximal zerlegt wird.

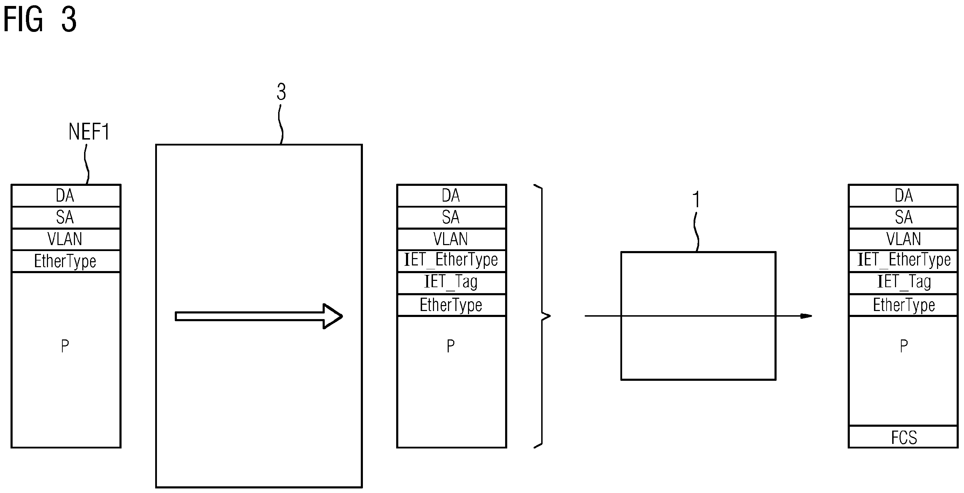

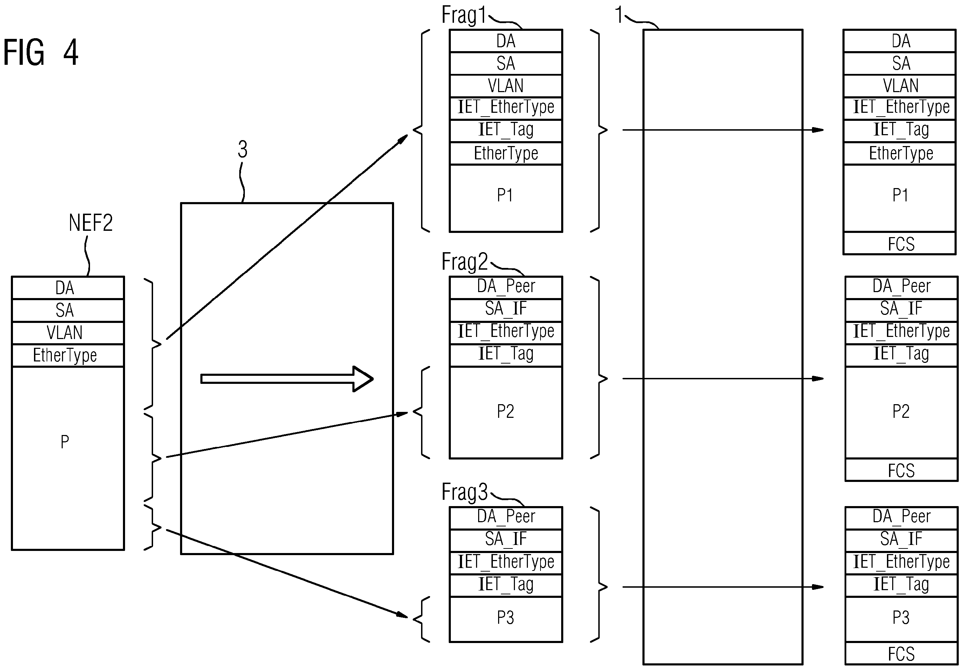

Die Figuren 2 bis 4 zeigen schematisch die Struktur und das Versenden von Datenframes. Dabei zeigt Figur 2 die Struktur und das Versenden eines Express-Frame EF, Figur 3 zeigt die Struktur und das Versenden eines Non-Express-Frame NEF1, das nicht in Teildatenframes aufgeteilt wird, und Figur 4 zeigt die Struktur und das Versenden eines Non-Express-Frame NEF2, das in drei Teildatenframes aufgeteilt wird.

Gemäß Figur 2 weist ein Express-Frame EF einen Header für Metadaten auf, der den in dem Express-Frame EF enthaltenen Nutzdaten P vorangestellt ist. Die in dem Header enthaltenen Metadaten umfassen eine Empfängeradresse DA, die eine MAC-Adresse (= Media-Access-Control-Adresse) des Empfängers ist, eine Senderadresse SA, die eine MAC-Adresse des Senders ist, einen optionalen VLAN-Tag VLAN und einen EtherType-Eintrag EtherType zur Kennzeichnung des zur Interpretation der Nutzdaten P benötigten Protokolls. Das Express-Frame EF wird von einem Sendemodul 1 an einem Sendeport des Senders, der mit einem Empfängerport des Empfängers verbunden ist, zur Erkennung von Übertragungsfehlern um eine Prüfsumme FCS ergänzt und an den Empfängerport des Empfängers gesendet. Die Prüfsumme FCS wird beispielsweise als eine CRC-Prüfsumme (CRC = Cyclic Redundany Check) in bekannter Weise aus den Metadaten und Nutzdaten P des Express-Frame EF gebildet und hinter den Nutzdaten P als Trailer des gesendeten Express-Frame EF eingefügt.

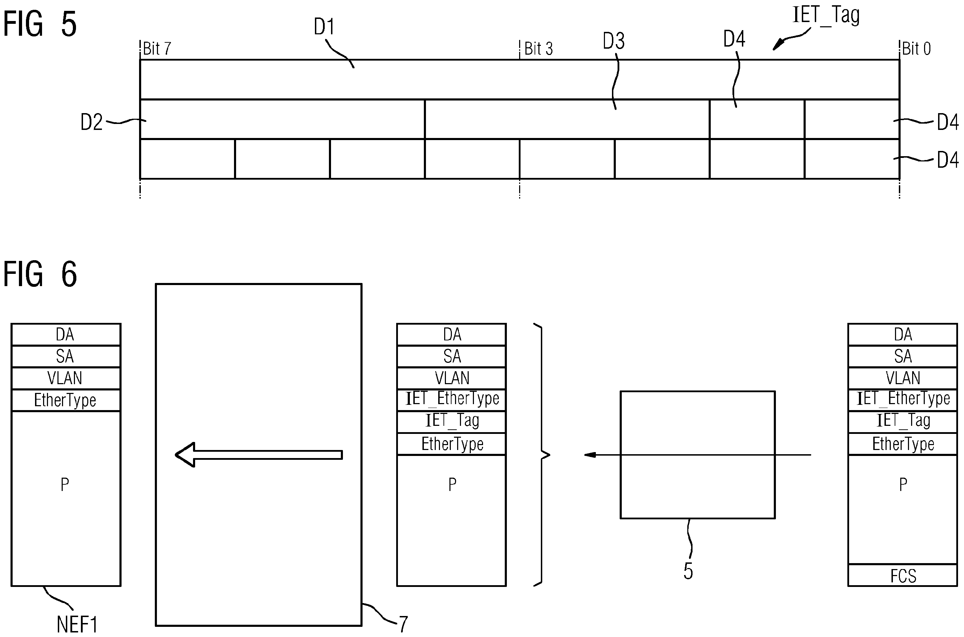

Figur 3 zeigt die Struktur und das Versenden eines Non-Express-Frame NEF1, das nicht in Teildatenframes aufgeteilt wird und dessen Übertragung nicht unterbrochen wird. Wie das in Figur 2 dargestellte Express-Frame EF weist das Non-Express-Frame NEF1 einen Header für Metadaten auf, die eine Empfängeradresse DA, eine Senderadresse SA, einen optionalen VLAN-Tag VLAN und einen EtherType-Eintrag EtherType umfassen. Um ein Non-Express-Frame NEF1 von einem Express-Frame EF zu unterscheiden und seine Multi-Level-Präemptionseigenschaften zu beschreiben, werden seinem Header von einem Präemptionsmodul 3 Metadaten hinzugefügt, die einen EtherType-Zusatzeintrag IET_EtherType und ein Präemptionstag IET_Tag umfassen. Der EtherType-Zusatzeintrag IET_EtherType unterscheidet den Non-Express-Frame NEF1 von einem Express-Frame EF. Der Präemptionstag IET_Tag enthält für die Multi-Level-Präemption relevante Informationen, die unten anhand von Figur 5 näher beschrieben werden. Nach dem Hinzufügen des EtherType-Zusatzeintrags IET_EtherType und des Präemptionstag IET_Tag wird das Non-Express-Frame NEF1 wie ein Express-Frame EF von einem Sendemodul 1 an einem Sendeport des Senders, der mit einem Empfängerport des Empfängers verbunden ist, zur Erkennung von Übertragungsfehlern um eine Prüfsumme FCS ergänzt und an den Empfängerport des Empfängers gesendet.

Figur 4 zeigt die Struktur und das Versenden eines Non-Express-Frame NEF2, dessen Nutzdaten P vor seiner Übertragung von dem Sender zu dem Empfänger gemäß der oben beschriebenen ersten Unterbrechungsvariante auf drei Teildatenframes Frag1, Frag2, Frag3 aufgeteilt werden. Wie das in Figur 2 dargestellte Express-Frame EF weist das Non-Express-Frame NEF2 einen Header für Metadaten auf, die eine Empfängeradresse DA, eine Senderadresse SA, einen optionalen VLAN-Tag VLAN und einen EtherType-Eintrag EtherType umfassen. Von einem Präemptionsmodul 3 werden aus dem Express-Frame NEF2 drei Teildatenframes Frag1, Frag2, Frag3 gebildet. Ein erstes Teildatenframe Frag1 enthält einen ersten Nutzdatenanteil P1 der Nutzdaten P des Non-Express-Frame NEF2 und weist einen Header auf, der wie der Header des in Figur 3 dargestellten Non-Express-Frame NEF1 als Metadaten die Empfängeradresse DA, die Senderadresse SA, den optionalen VLAN-Tag VLAN und den EtherType-Eintrag EtherType sowie einen EtherType-Zusatzeintrag IET_EtherType und einen Präemptionstag IET_Tag umfasst. Die beiden weiteren Teildatenframes Frag2, Frag3 enthalten jeweils einen weiteren Nutzdatenanteil P2, P3 der Nutzdaten P des Express-Frame NEF2 und weisen jeweils einen Header auf, der als Metadaten eine für Teildatenframes reservierte Multicastadresse DA_Peer, eine für den jeweiligen Sendeport des Senders spezifische MAC-Portadresse SA_IF sowie einen EtherType-Zusatzeintrag IET_EtherType und einen Präemptionstag IET_Tag enthält. Von einem Sendemodul 1 an dem Sendeport wird jedes von dem Präemptionsmodul 3 gebildete Teildatenframe Frag1, Frag2, Frag3 zur Erkennung von Übertragungsfehlern um eine Prüfsumme FCS ergänzt und an einen Empfängerport des Empfängers gesendet.

Figur 5 zeigt beispielhaft auf drei Bytes aufgeteilte Datenfelder eines Präemptionstag IET_Tag eines Non-Express-Frame NEF1, NEF2, wobei jedes Byte des Präemptionstag IET_Tag in Figur 5 in einer Zeile dargestellt ist.

Ein erstes Datenfeld D1, das acht Bit umfasst, und ein zweites Datenfeld D2, das drei Bit umfasst, enthalten eine Anzahl noch nicht gesendeter Nutzdatenbytes des Non-Express-Frame NEF1, NEF2. Die Gesamtanzahl Elf der Bits dieser Datenfelder D1, D2 dieses Ausführungsbeispiels ist der Maximalanzahl 1500 von Nutzdatenbytes angepasst, die üblicherweise für ein Ethernet-Frame vorgesehen sind. Anhand der in den Datenfeldern D1, D2 enthaltenen Anzahl noch nicht gesendeter Nutzdatenbytes und der Anzahl bereits empfangener Nutzdatenbytes eines Non-Express-Frame NEF1, NEF2 kann der Empfänger erkennen, ob er bereits alle Nutzdaten P des Non-Express-Frame NEF1, NEF2 empfangen hat.

Ein drittes Datenfeld D3, das drei Bit umfasst, enthält eine dem Non-Express-Frame NEF1, NEF2 zugewiesene Framenummer, anhand derer verschiedene Non-Express-Frames NEF1, NEF2 derselben Sendeliste unterschieden werden. Durch den in Figur 5 dargestellten Präemptionstag IET_Tag können also acht verschiedene Framenummern vergeben werden und somit acht Non-Express-Frames NEF1, NEF2 voneinander unterschieden werden. Wenn ein Non-Express-Frame NEF1, NEF2 in mehrere Teildatenframes Frag1, Frag2, Frag3 aufgeteilt wird (siehe Figur 4), erhalten alle diese Teildatenframes Frag1, Frag2, Frag3 dieselbe Framenummer, so dass der Empfänger zu demselben Non-Express-Frame NEF1, NEF2 gehörende Teildatenframes Frag1, Frag2, Frag3 identifizieren kann.

Weitere vierte Datenfelder D4, die jeweils ein Bit umfassen, enthalten die dem Non-Express-Frame NEF1, NEF2 zugeordnete Unterbrechungspriorität. Dabei ist die Anzahl der dafür benötigten vierten Datenfelder D4 von der Anzahl der in der Prioritätsmenge enthaltenen Unterbrechungsprioritäten abhängig. In Figur 5 sind zehn vierte Datenfelder D4 dargestellt. Wenn die Prioritätsmenge jedoch beispielsweise nur drei verschiedene Unterbrechungsprioritäten enthält, wird zur Kennzeichnung der Unterbrechungspriorität eines Non-Express-Frame NEF1, NEF2 nur ein viertes Datenfeld D4 benötigt, da die Prioritätsmenge nur zwei verschiedene Unterbrechungsprioritäten enthält, die einem Non-Express-Frame NEF1, NEF2 zugeordnet werden können (denn die höchste Unterbrechungspriorität ist ja jeweils für Express-Frames EF reserviert). Wenn die Prioritätsmenge dagegen beispielsweise fünf verschiedene Unterbrechungsprioritäten enthält, werden zur Kennzeichnung der Unterbrechungspriorität eines Non-Express-Frame NEF1, NEF2 zwei vierte Datenfelder D4 benötigt. Entsprechendes gilt für höhere Anzahlen in der Prioritätsmenge enthaltener Unterbrechungsprioritäten.

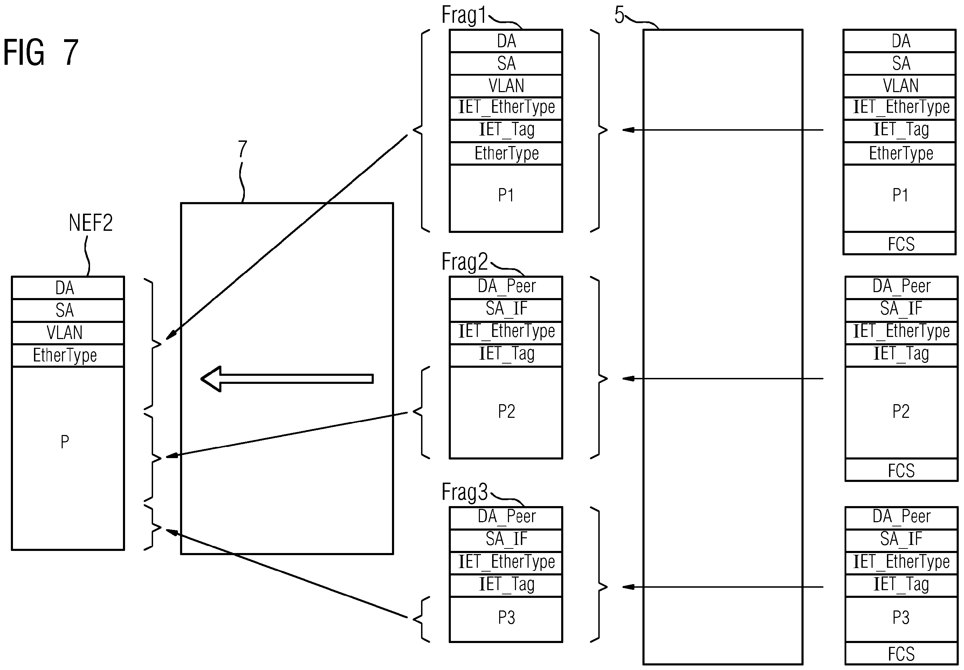

Figuren 6 und 7 zeigen jeweils den Empfang eines Non-Express-Frame NEF1, NEF2 an einem Empfängerport eines Empfängers des Non-Express-Frame NEF1, NEF2.

Figur 6 zeigt den Empfang eines gemäß Figur 3 ohne Unterbrechung gesendeten Non-Express-Frame NEF1, das nicht in Teildatenframes aufgeteilt wurde. Das Non-Express-Frame NEF1 wird von einem Empfängermodul 5 am Empfangsport empfangen. Das Empfängermodul 5 überprüft anhand der Prüfsumme FCS, ob das Non-Express-Frame NEF1 fehlerfrei empfangen wurde. Wenn das Ergebnis dieser Überprüfung positiv ausfällt, entfernt das Empfängermodul 5 die Prüfsumme FCS und übergibt das Non-Express-Frame NEF1 einem Defragmentierungsmodul 7. Das Defragmentierungsmodul 7 erkennt anhand der Metadaten im Header des Non-Express-Frame NEF1, dass das Non-Express-Frame NEF1 nicht in Teildatenframes aufgeteilt ist und vollständig empfangen wurde, und entfernt den EtherType-Zusatzeintrag IET_EtherType und den Präemptionstag IET_Tag aus dem Header.

Figur 7 zeigt den Empfang eines gemäß Figur 4 gesendeten Non-Express-Frame NEF2, das in drei Teildatenframes Frag1, Frag2, Frag3 aufgeteilt wurde. Die drei jeweils eine Prüfsumme FCS enthaltenden Teildatenframes Frag1, Frag2, Frag3 werden nacheinander von einem Empfängermodul 5 am Empfangsport empfangen. Das Empfängermodul 5 überprüft für jedes Teildatenframe Frag1, Frag2, Frag3 anhand dessen Prüfsumme FCS, ob das Teildatenframe Frag1, Frag2, Frag3 fehlerfrei empfangen wurde. Wenn das Ergebnis dieser Überprüfung positiv ausfällt, entfernt das Empfängermodul 5 die jeweilige Prüfsumme FCS und übergibt das jeweilige Teildatenframe Frag1, Frag2, Frag3 einem Defragmentierungsmodul 7. Das Defragmentierungsmodul 7 erkennt anhand der Metadaten in den Headern der Teildatenframes Frag1, Frag2, Frag3, dass das Non-Express-Frame NEF2 in Teildatenframes Frag1, Frag2, Frag3 aufgeteilt ist und wann alle drei Teildatenframes Frag1, Frag2, Frag3 vollständig empfangen wurden. Nachdem alle drei Teildatenframes Frag1, Frag2, Frag3 vollständig empfangen wurden, setzt das Defragmentierungsmodul 7 die Teildatenframes Frag1, Frag2, Frag3 wieder zu dem ursprünglichen Non-Express-Frame NEF2 zusammen, wobei es den EtherType-Zusatzeintrag IET_EtherType und den Präemptionstag IET_Tag aus dem Header entfernt.

Gemäß den Figuren 2 bis 4, 6 und 7 fügen die Sendemodule 1 von ihnen gesendeten Datenframes lediglich jeweils eine Prüfsumme FCS hinzu und die Empfängermodule 5 entfernen jeweils lediglich die Prüfsumme FCS aus den von ihnen empfangenen Datenframes, wobei das Hinzufügen und Entfernen einer Prüfsumme FCS jeweils in gleicher Weise für ein Express-Frame, ein nicht auf Teildatenframes aufgeteiltes Non-Express-Frame und ein Teildatenframe eines Non-Express-Frame durchgeführt wird. Es werden daher für die Verarbeitung von Express-Frames, Non-Express-Frames und Teildatenframes gegenüber der Verwendung eines herkömmlichen Ethernet-Protokolls ohne Multi-Level-Präemption keine speziellen oder zusätzlichen Sendemodule 1 oder Empfängermodule 5 benötigt.

Der EtherType-Zusatzeintrag IET_EtherType und der Präemptionstag IET_Tag dienen lediglich dazu, die Übertragungsunterbrechungen mit Multi-Level-Präemption zu realisieren und werden nach dem Empfang von Non-Express-Frames wieder entfernt, so dass diese Frames nach ihrem Empfang in ihrer ursprünglichen Form von höheren Schichten des OSI-Modells (= Open Systems Interconnection Model) verarbeitet werden können.

Figur 8 zeigt ein Ablaufdiagramm der oben bereits erwähnten ersten Unterbrechungsvariante für eine Sendeliste für den Fall, dass die Prioritätsmenge fünf verschiedene Unterbrechungsprioritäten enthält. Im Folgenden werden die höchste dieser Unterbrechungsprioritäten als Unterbrechungspriorität 0, die zweithöchste als Unterbrechungspriorität 1, die dritthöchste als Unterbrechungspriorität 2, die vierthöchste als Unterbrechungspriorität 3 und die fünfthöchste als Unterbrechungspriorität 4 bezeichnet. Jedem Express-Frame wird also die Unterbrechungspriorität 0 zugeordnet, während jedem Non-Express-Frame eine der Unterbrechungsprioritäten 1 bis 4 zugeordnet wird. Das in Figur 8 dargestellte Ablaufdiagramm enthält Verfahrensschritte S1 bis S9.4, die im Folgenden beschrieben werden.

S1: Der Sendeliste wird ein Datenframe entnommen, das im Folgenden als das "betrachtete Datenframe" bezeichnet wird und unter allen in der Sendeliste momentan enthaltenen und nicht bearbeiteten Datenframes eine höchste Unterbrechungspriorität aufweist.

S2: Es wird geprüft, ob das betrachtete Datenframe ein Non-Express-Frame ist, beispielsweise indem geprüft wird, ob es einen EtherType-Zusatzeintrag IET_EtherType aufweist. Wenn dies nicht der Fall ist, ist das betrachtete Datenframe ein Express-Frame und es wird S3 ausgeführt; andernfalls ist das betrachtete Datenframe ein Non-Express-Frame und es wird S4 ausgeführt.

S3: Das betrachtete Datenframe, das in diesem Fall ein Express-Frame ist, wird gesendet (siehe Figur 2 und deren Beschreibung). Anschließend wird wieder S1 ausgeführt.

S4: Es wird, beispielsweise mittels eines LLDP, geprüft, ob sowohl der Sender als auch der Empfänger Multi-Level-Präemption unterstützen. Wenn dies nicht der Fall ist, wird S5 ausgeführt; andernfalls wird S6.1 ausgeführt.

S5: Das betrachtete Datenframe, das in diesem Fall ein Non-Express-Frame ist, wird ohne Unterbrechung gesendet (siehe Figur 3 und deren Beschreibung). Anschließend wird wieder S1 ausgeführt.

S6.X für X=1, 2, 3, 4: Es wird geprüft, ob die Sendeliste ein noch zu sendendes Teildatenframe Frag2, Frag3 mit der Unterbrechungspriorität X enthält. Wenn dies der Fall ist, wird S7.X ausführt; andernfalls wird S8.X ausgeführt.

S7.X für X=1, 2, 3, 4: Das in S6.X ermittelte noch zu sendende Teildatenframe Frag2, Frag3 mit der Unterbrechungspriorität X wird gesendet. Anschließend wird S1 ausgeführt.

S8.X für X=1, 2, 3, 4: Es wird geprüft, ob die Sendeliste ein Non-Express-Frame mit der Unterbrechungspriorität X enthält. Wenn dies nicht der Fall ist, wird in den Fällen X=1, 2, 3 der Verfahrensschritt S6.X+1 und in dem Fall X=4 der Verfahrensschritt S1 ausgeführt; andernfalls wird S9.X ausgeführt.

S9.X für X=1, 2, 3, 4: Ein in S8.X ermitteltes Non-Express-Frame mit der Unterbrechungspriorität X wird wie oben beschrieben gegebenenfalls, d. h. wenn dieses Non-Express-Frame mehr Nutzdatenbytes als die vorgegebene Mindestbyteanzahl enthält, in Teildatenframes Frag1, Frag2, Frag3 aufgeteilt. Wenn das Non-Express-Frame in Teildatenframes Frag1, Frag2, Frag3 aufgeteilt wird, wird das erste Teildatenframe Frag1 gesendet (siehe Figur 4 und deren Beschreibung) und die weiteren Teildatenframes Frag2, Frag3 werden in die Sendeliste aufgenommen. Andernfalls, d. h. wenn das Non-Express-Frame nicht in Teildatenframes aufgeteilt wird, wird das Non-Express-Frame ohne Unterbrechung gesendet (siehe Figur 3 und deren Beschreibung). Anschließend wird S1 ausgeführt.

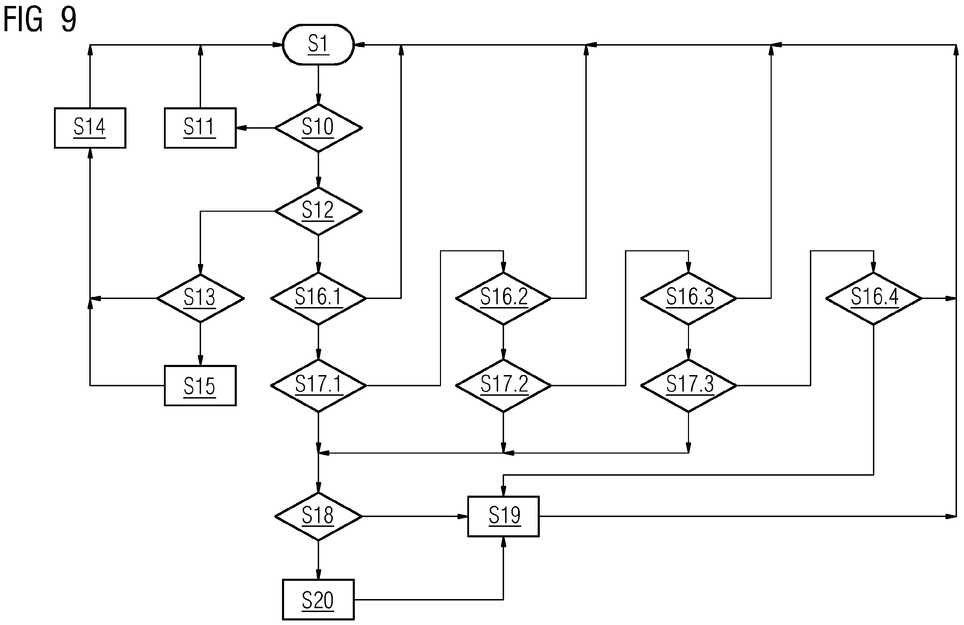

Figur 9 zeigt ein Ablaufdiagramm der oben bereits erwähnten zweiten Unterbrechungsvariante für eine Sendeliste für den Fall, dass die Prioritätsmenge fünf verschiedene Unterbrechungsprioritäten enthält. Wie in der Beschreibung von Figur 8 werden die höchste dieser Unterbrechungsprioritäten als Unterbrechungspriorität 0, die zweithöchste als Unterbrechungspriorität 1, die dritthöchste als Unterbrechungspriorität 2, die vierthöchste als Unterbrechungspriorität 3 und die fünfthöchste als Unterbrechungspriorität 4 bezeichnet. Jedem Express-Frame wird also die Unterbrechungspriorität 0 zugeordnet, während jedem Non-Express-Frame eine der Unterbrechungsprioritäten 1 bis 4 zugeordnet wird. Das in Figur 9 dargestellte Ablaufdiagramm enthält Verfahrensschritte S1 und S10 bis S20, die im Folgenden beschrieben werden.

S1: Der Sendeliste wird ein Datenframe entnommen, das im Folgenden als das "betrachtete Datenframe" bezeichnet wird und unter allen in der Sendeliste momentan enthaltenen und nicht bearbeiteten Datenframes eine höchste Unterbrechungspriorität aufweist.

S10: Es wird, beispielsweise mittels eines LLDP, geprüft, ob sowohl der Sender als auch der Empfänger Multi-Level-Präemption unterstützen. Wenn dies nicht der Fall ist, wird S11 ausgeführt; andernfalls wird S12 ausgeführt.

S11: Das betrachtete Datenframe wird gesendet. Anschließend wird S1 ausgeführt.

S12: Es wird geprüft, ob das betrachtete Datenframe ein Non-Express-Frame ist, beispielsweise indem geprüft wird, ob es einen EtherType-Zusatzeintrag IET_EtherType aufweist. Wenn dies nicht der Fall ist, ist das betrachtete Datenframe ein Express-Frame und es wird S13 ausgeführt; andernfalls ist das betrachtete Datenframe ein Non-Express-Frame und es wird S16.1 ausgeführt.

S13: Es wird geprüft, ob momentan ein Non-Express-Frame gesendet wird. Wenn dies nicht der Fall ist, wird S14 ausgeführt; andernfalls wird S15 ausgeführt.

S14: Das betrachtete Datenframe, das in diesen Fall ein Express-Frame ist, wird vollständig übertragen. Anschließend wird S1 ausgeführt.

S15: Wenn die noch nicht übertragene Anzahl von Nutzdatenbytes des momentan gesendeten Non-Express-Frame die Mindestrestbyteanzahl überschreitet, wird die Übertragung des momentan gesendeten Non-Express-Frame unterbrochen und ein Teildatenframe, das die noch nicht übertragenen Nutzdaten des Non-Express-Frame enthält, gebildet und in die Sendeliste aufgenommen. Andernfalls wird die Übertragung des momentan gesendeten Non-Express-Frame abgeschlossen. In jedem Fall wird anschließend S14 durchgeführt.

S16.X für X=1, 2, 3, 4: Es wird geprüft, ob gerade ein Non-Express-Frame mit der Unterbrechungspriorität X gesendet wird. Wenn dies der Fall ist, wird S1 ausgeführt; andernfalls wird in den Fällen X=1, 2, 3 der Verfahrensschritt S17.X und in dem Fall X=4 der Verfahrensschritt S19 ausgeführt.

S17.X für X=1, 2, 3: Es wird geprüft, ob das betrachtete Datenframe die Unterbrechungspriorität X hat. Wenn dies nicht der Fall ist, wird S16.X+1 ausgeführt; andernfalls wird S18 ausgeführt.

S18: Es wird geprüft, ob momentan ein Non-Express-Frame gesendet wird. Wenn dies nicht der Fall ist, wird S19 ausgeführt; andernfalls wird S20 ausgeführt.

S19: Es wird damit begonnen, das betrachtete Datenframe zu übertragen. Anschließend wird S1 ausgeführt.

S20: Wenn die noch nicht übertragene Anzahl von Nutzdatenbytes des momentan gesendeten Non-Express-Frame die Mindestrestbyteanzahl überschreitet, wird die Übertragung des momentan gesendeten Non-Express-Frame unterbrochen und ein Teildatenframe, das die noch nicht übertragenen Nutzdaten des Non-Express-Frame enthält, gebildet und in die Sendeliste aufgenommen. Andernfalls wird die Übertragung des momentan gesendeten Non-Express-Frame abgeschlossen. In jedem Fall wird anschließend S19 durchgeführt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

1 Sendemodul
3 Präemptionsmodul
5 Empfängermodul
7 Defragmentierungsmodul
D1 bis D4 Datenfeld
DA Empfängeradresse
DA_Peer Multicastadresse
EF, EF_1, EF_2 Express-Frame
EtherType EtherType-Eintrag
FCS Prüfsumme
Frag1, Frag2, Frag3 Teildatenframe
IET_EtherType EtherType-Zusatzeintrag
IET_Tag Präemptionstag
NEF1, NEF2 Non-Express-Frame
NEF1 Frag_1, NEF1 Frag_2, NEF1 Frag_3 Teildatenframe
NEF2 Frag_1, NEF2 Frag_2, NEF2 Frag_3 Teildatenframe
P Nutzdaten
P1, P2, P3 Nutzdatenanteil
S1 bis S20 Verfahrensschritt
SA Senderadresse
SA_IF MAC-Portadresse
VLAN VLAN-Tag

## Patentansprüche

1. Verfahren zur Datenübertragung in einem Kommunikationsnetzwerk, wobei
- Metadaten und Nutzdaten (P) enthaltende Datenframes (EF, EF_1, EF_2, NEF1, NEF2) über Punkt-zu-Punkt-Verbindungen zwischen jeweils einem Sender und einem Empfänger gemäß einem Kommunikationsprotokoll übertragen werden,
- für jede Punkt-zu-Punkt-Verbindung eine Sendeliste von dem Sender zu dem Empfänger zu übertragender Datenframes (EF, EF_1, EF_2, NEF1, NEF2) geführt wird,
- eine Prioritätsmenge von wenigstens drei Unterbrechungsprioritäten paarweise verschiedener Wertigkeiten vorgegeben wird,
- und, ermöglicht durch das Kommunikationsprotokoll, jedem Datenframe (EF, EF_1, EF_2, NEF1, NEF2) einer Sendeliste eine Unterbrechungspriorität der Prioritätsmenge zugeordnet wird und eine momentane Übertragung eines Datenframe (NEF1, NEF2) der Sendeliste unterbrochen wird, um ein in der Sendeliste enthaltenes Datenframe (EF, EF_1, EF_2, NEF1, NEF2), dem eine höhere Unterbrechungspriorität als dem momentan übertragenen Datenframe (NEF1, NEF2) zugeordnet ist, zu übertragen **dadurch gekennzeichnet, dass** zwischen dem Sender und dem Empfänger einer Punkt-zu-Punkt-Verbindung der Punkt-zu-Punkt Verbindungen vereinbart wird,
wie viele verschiedene Unterbrechungsprioritäten für die Sendeliste der Punkt-zu-Punkt-Verbindung zur Verfügung gestellt werden.

2. Verfahren nach Anspruch 1,
**dadurch gekennzeichnet, dass** ermöglicht durch das Kommunikationsprotokoll
- die Nutzdaten (P) eines in einer Sendeliste enthaltenen Datenframe (NEF1, NEF2), dem eine Unterbrechungspriorität zugeordnet ist, die kleiner als die höchste in der Prioritätsmenge enthaltene Unterbrechungspriorität ist, vor der Übertragung des Datenframe auf Teildatenframes (Fragl, Frag2, Frag3, NEF1 Frag_1, NEF1 Frag_2, NEF1 Frag_3, NEF2 Frag_1, NEF2 Frag_2, NEF2 Frag_3) aufgeteilt werden,
- die Teildatenframes (Fragl, Frag2, Frag3, NEF1 Frag_1, NEF1 Frag_2, NEF1 Frag_3, NEF2 Frag_1, NEF2 Frag_2, NEF2 Frag_3) des Datenframe (NEF1, NEF2) nacheinander übertragen werden,
- und ermittelt wird, ob die Übertragung des Datenframe (NEF1, NEF2) zu unterbrechen ist, indem vor dem Senden eines Teildatenframe (Fragl, Frag2, Frag3, NEF1 Frag_1, NEF1 Frag_2, NEF1 Frag_3, NEF2 Frag_1, NEF2 Frag_2, NEF2 Frag 3) des Datenframe (NEF1, NEF2) jeweils geprüft wird, ob die Sendeliste ein Datenframe (EF, EF_1, EF_2, NEF1, NEF2) enthält, dem eine höhere Unterbrechungspriorität als dem Datenframe (NEF1, NEF2) dieses Teildatenframe (Fragl, Frag2, Frag3, NEF1 Frag_1, NEF1 Frag_2, NEF1 Frag_3, NEF2 Frag_1, NEF2 Frag_2, NEF2 Frag_3) zugeordnet ist.

3. Verfahren nach Anspruch 2,
**dadurch gekennzeichnet, dass** jedes Teildatenframe (Fragl, Frag2, Frag3, NEF1 Frag_1, NEF1 Frag_2, NEF1 Frag_3, NEF2 Frag_1, NEF2 Frag_2, NEF2 Frag_3) eine Framelänge von mindestens 64 Byte aufweist.

4. Verfahren nach einem der vorhergehenden Ansprüche, **dadurch gekennzeichnet, dass**, ermöglicht durch das Kommunikationsprotokoll, die Übertragung eines Datenframe (NEF1, NEF2) einer Sendeliste unterbrochen wird, wenn während der Übertragung des Datenframe (NEF1, NEF2) ein Datenframe (EF, EF_1, EF__2, NEF1, NEF2), dem eine höhere Unterbrechungspriorität als dem momentan übertragenen Datenframe (NEF1, NEF2) zugeordnet ist, in die Sendeliste aufgenommen wird.

5. Verfahren nach Anspruch 4,
**dadurch gekennzeichnet, dass** eine Mindestrestbyteanzahl vorgegeben wird und die Übertragung eines Datenframe (NEF1, NEF2) einer Sendeliste nur dann unterbrochen wird, wenn eine noch nicht übertragene Anzahl von Nutzdatenbytes des Datenframe (NEF1, NEF2) die vorgegebene Mindestrestbyteanzahl überschreitet.

6. Verfahren nach Anspruch 4 oder 5,
**dadurch gekennzeichnet, dass** bei einer Unterbrechung der Übertragung eines Datenframe (NEF1, NEF2) einer Sendeliste ein Teildatenframe (Fragl, Frag2, Frag3, NEF1 Frag_1, NEF1 Frag_2, NEF1 Frag_3, NEF2 Frag_1, NEF2 Frag_2, NEF2 Frag_3), das die noch nicht übertragenen Nutzdaten (P) des Datenframe (NEF1, NEF2) enthält, gebildet und in die Sendeliste aufgenommen wird.

7. Verfahren nach einem der vorhergehenden Ansprüche,
**dadurch gekennzeichnet, dass** die Metadaten jedes Datenframe (NEF1, NEF2), dem eine Unterbrechungspriorität zugeordnet ist, die kleiner als die höchste in der Prioritätsmenge enthaltene Unterbrechungspriorität ist, die dem Datenframe (NEF1, NEF2) zugeordnete Unterbrechungspriorität und eine das Datenframe (NEF1, NEF2) charakterisierende Framenummer enthalten.

8. Verfahren nach einem der Ansprüche 2 oder 3 oder 6,
**dadurch gekennzeichnet, dass** jedes Teildatenframe (Fragl, Frag2, Frag3, NEF1 Frag_1, NEF1 Frag_2, NEF1 Frag_3, NEF2 Frag_1, NEF2 Frag_2, NEF2 Frag_3) eines Datenframe (NEF1, NEF2) Metadaten enthält, welche die dem Datenframe (NEF1, NEF2) zugeordnete Unterbrechungspriorität, eine das Datenframe (NEF1, NEF2) charakterisierende Framenummer und eine Anzahl noch nicht gesendeter Nutzdatenbytes des Datenframe (NEF1, NEF2) enthalten.

9. Verfahren nach Anspruch 8,
**dadurch gekennzeichnet, dass** eine für Teildatenframes (Fragl, Frag2, Frag3, NEF1 Frag_1, NEF1 Frag_2, NEF1 Frag_3, NEF2 Frag_1, NEF2 Frag_2, NEF2 Frag_3) reservierte Multicastadresse (DA_Peer) vorgegeben wird und die Metadaten jedes auf ein erstes Teildatenframe (Fragl, NEF1 Frag_1, NEF2 Frag_1) folgenden Teildatenframe (Frag2, Frag 3, NEF1 Frag_2, NEF1 Frag_3, NEF2 Frag_2, NEF2 Frag_3) diese vorgegebene Multicastadresse (DA_Peer) als eine Zieladresse enthalten.

10. Verfahren nach Anspruch 8 oder 9,
**dadurch gekennzeichnet, dass** ein Empfänger eines in Teildatenframes (Fragl, Frag2, Frag3, NEF1 Frag_1, NEF1 Frag_2, NEF1 Frag_3, NEF2 Frag_1, NEF2 Frag_2, NEF2 Frag_3) aufgeteilten Datenframe (NEF1, NEF2) anhand der Metadaten der von dem Empfänger empfangenen Teildatenframes (Fragl, Frag2, Frag3, NEF1 Frag_1, NEF1 Frag_2, NEF1 Frag_3, NEF2 Frag_1, NEF2 Frag_2, NEF2 Frag_3) ermittelt, ob er alle Teildatenframes (Fragl, Frag2, Frag3, NEF1 Frag_1, NEF1 Frag_2, NEF1 Frag_3, NEF2 Frag_1, NEF2 Frag_2, NEF2 Frag_3) des Datenframe (NEF1, NEF2) empfangen hat, indem er die Gesamtanzahl der Nutzdatenbytes aller von ihm empfangenen Teildatenframes (Fragl, Frag2, Frag3, NEF1 Frag_1, NEF1 Frag_2, NEF1 Frag_3, NEF2 Frag_1, NEF2 Frag_2, NEF2 Frag_3), deren Metadaten dieselbe Framenummer enthalten, ermittelt und mit der Gesamtanzahl der Nutzdatenbytes (P) des Datenframe (NEF1, NEF2) vergleicht, und dass der Empfänger die von ihm empfangenen Teildatenframes (Fragl, Frag2, Frag3, NEF1 Frag_1, NEF1 Frag_2, NEF1 Frag_3, NEF2 Frag_1, NEF2 Frag_2, NEF2 Frag_3), deren Metadaten dieselbe Framenummer enthalten, zu einem Datenframe (NEF1, NEF2) zusammensetzt, nachdem er alle Teildatenframes (Fragl, Frag2, Frag3, NEF1 Frag_1, NEF1 Frag_2, NEF1 Frag_3, NEF2 Frag_1, NEF2 Frag_2, NEF2 Frag_3) eines Datenframe (NEF1, NEF2) empfangen hat.

11. Verwendung des Verfahrens nach einem der vorhergehenden Ansprüche in einem Kommunikationsnetzwerk, das als ein Ethernet-Netzwerk ausgebildet ist.

## Claims

1. Method for data transmission in a communication network,
wherein
- data frames (EF, EF_1, EF_2, NEF1, NEF2) including metadata and useful data (P) are transmitted via point-to-point connections between a respective transmitter and a receiver according to a communication protocol,
- a transmission list of data frames (EF, EF_1, EF_2, NEF1, NEF2) to be transmitted from the transmitter to the receiver is managed for each point-to-point connection,
- a priority set of at least three interrupt priorities having significances differing in pairs is prescribed,
- and, as allowed by the communication protocol, each data frame (EF, EF_1, EF_2, NEF1, NEF2) on a transmission list is allocated an interrupt priority of the priority set, and a present transmission of a data frame (NEF1, NEF2) on the transmission list is interrupted in order to transmit a data frame (EF, EF_1, EF_2, NEF1, NEF2) that is included in the transmission list and that has a higher allocated interrupt priority than the presently transmitted data frame (NEF1, NEF2), **characterized in that** the transmitter and the receiver of a point-to-point connection of the point-to-point connections agree how many different interrupt priorities are made available for the transmission list of the point-to-point connection.

2. Method according to Claim 1,
**characterized in that**, as allowed by the communication protocol,
- the useful data (P) of a data frame (NEF1, NEF2) that is included in a transmission list and that has an allocated interrupt priority that is lower than the highest interrupt priority included in the priority set are split over data frame fragments (Fragl, Frag2, Frag3, NEF1 Frag_1, NEF1 Frag_2, NEF1 Frag_3, NEF2 Frag_1, NEF2 Frag_2, NEF2 Frag_3) before the transmission of the data frame,
- the data frame fragments (Fragl, Frag2, Frag3, NEF1 Frag_1, NEF1 Frag_2, NEF1 Frag_3, NEF2 Frag_1, NEF2 Frag_2, NEF2 Frag_3) of the data frame (NEF1, NEF2) are transmitted in succession,
- and it is ascertained whether the transmission of the data frame (NEF1, NEF2) is to be interrupted by respectively checking, before the sending of a data frame fragment (Fragl, Frag2, Frag3, NEF1 Frag_1, NEF1 Frag_2, NEF1 Frag_3, NEF2 Frag_1, NEF2 Frag_2, NEF2 Frag_3) of the data frame (NEF1, NEF2), whether the transmission list includes a data frame (EF, EF_1, EF_2, NEF1, NEF2) that has a higher allocated interrupt priority than the data frame (NEF1, NEF2) of this data frame fragment (Fragl, Frag2, Frag3, NEF1 Frag_1, NEF1 Frag_2, NEF1 Frag_3, NEF2 Frag_1, NEF2 Frag_2, NEF2 Frag_3) .

3. Method according to Claim 2,
**characterized in that** each data frame fragment (Fragl, Frag2, Frag3, NEF1 Frag_1, NEF1 Frag_2, NEF1 Frag_3, NEF2 Frag_1, NEF2 Frag_2, NEF2 Frag_3) has a frame length of at least 64 bytes.

4. Method according to one of the preceding claims,
**characterized in that**, as allowed by the communication protocol, the transmission of a data frame (NEF1, NEF2) on a transmission list is interrupted if, during the transmission of the data frame (NEF1, NEF2), a data frame (EF, EF_1, EF_2, NEF1, NEF2) that has a higher allocated interrupt priority than the presently transmitted data frame (NEF1, NEF2) is incorporated into the transmission list.

5. Method according to Claim 4,
**characterized in that** a minimum residual number of bytes is prescribed and the transmission of a data frame (NEF1, NEF2) on a transmission list is interrupted only if an as yet untransmitted number of useful data bytes of the data frame (NEF1, NEF2) exceeds the prescribed minimum residual number of bytes.

6. Method according to Claim 4 or 5,
**characterized in that** an interruption in the transmission of a data frame (NEF1, NEF2) on a transmission list prompts a data frame fragment (Fragl, Frag2, Frag3, NEF1 Frag_1, NEF1 Frag_2, NEF1 Frag_3, NEF2 Frag_1, NEF2 Frag_2, NEF2 Frag_3) that includes the as yet untransmitted useful data (P) of the data frame (NEF1, NEF2) to be formed and incorporated into the transmission list.

7. Method according to one of the preceding claims,
**characterized in that** the metadata of each data frame (NEF1, NEF2) that has an allocated interrupt priority that is lower than the highest interrupt priority included in the priority set include the interrupt priority allocated to the data frame (NEF1, NEF2) and a frame number that characterizes the data frame (NEF1, NEF2).

8. Method according to one of Claims 2 or 3 or 6,
**characterized in that** each data frame fragment (Fragl, Frag2, Frag3, NEF1 Frag_1, NEF1 Frag_2, NEF1 Frag_3, NEF2 Frag_1, NEF2 Frag_2, NEF2 Frag_3) of a data frame (NEF1, NEF2) includes metadata that include the interrupt priority allocated to the data frame (NEF1, NEF2), a frame number that characterizes the data frame (NEF1, NEF2) and a number of as yet unsent useful data bytes of the data frame (NEF1, NEF2).

9. Method according to Claim 8,
**characterized in that** a multicast address (DA_Peer) reserved for data frame fragments (Fragl, Frag2, Frag3, NEF1 Frag_1, NEF1 Frag_2, NEF1 Frag_3, NEF2 Frag_1, NEF2 Frag_2, NEF2 Frag_3) is prescribed and the metadata of each data frame fragment (Frag2, Frag3, NEF1 Frag_2, NEF1 Frag_3, NEF2 Frag_2, NEF2 Frag_3) that follows a first data frame fragment (Fragl, NEF1 Frag_1, NEF2 Frag_1) include this prescribed multicast address (DA_Peer) as a destination address.

10. Method according to Claim 8 or 9,
**characterized in that** a receiver of a data frame (NEF1, NEF2) split into data frame fragments (Fragl, Frag2, Frag3, NEF1 Frag_1, NEF1 Frag_2, NEF1 Frag_3, NEF2 Frag_1, NEF2 Frag_2, NEF2 Frag_3) uses the metadata of the data frame fragments (Fragl, Frag2, Frag3, NEF1 Frag_1, NEF1 Frag_2, NEF1 Frag_3, NEF2 Frag_1, NEF2 Frag_2, NEF2 Frag_3) received by the receiver to ascertain whether it has received all data frame fragments (Fragl, Frag2, Frag3, NEF1 Frag_1, NEF1 Frag_2, NEF1 Frag_3, NEF2 Frag_1, NEF2 Frag_2, NEF2 Frag_3) of the data frame (NEF1, NEF2) by ascertaining the total number of the useful data bytes of all data frame fragments (Fragl, Frag2, Frag3, NEF1 Frag_1, NEF1 Frag_2, NEF1 Frag_3, NEF2 Frag_1, NEF2 Frag_2, NEF2 Frag_3) received by it whose metadata include the same frame number and comparing said total number with the total number of the useful data bytes (P) of the data frame (NEF1, NEF2), and **in that** the receiver compiles the data frame fragments (Fragl, Frag2, Frag3, NEF1 Frag_1, NEF1 Frag_2, NEF1 Frag_3, NEF2 Frag_1, NEF2 Frag_2, NEF2 Frag_3) received by it whose metadata include the same frame number to form a data frame (NEF1, NEF2) after said receiver has received all data frame fragments (Fragl, Frag2, Frag3, NEF1 Frag_1, NEF1 Frag_2, NEF1 Frag_3, NEF2 Frag_1, NEF2 Frag_2, NEF2 Frag_3) of a data frame (NEF1, NEF2) .

11. Use of the method according to one of the preceding claims in a communication network that is in the form of an Ethernet network.

## Revendications

1. Procédé de transmission de données dans un réseau de communication,
- des trames de données (EF, EF_1, EF_2, NEF1, NEF2) contenant des métadonnées et des données utiles (P) étant transmises par des connexions point-à-point entre chaque fois un émetteur et un récepteur selon un protocole de communication,
- pour chaque connexion point-à-point une liste d'envoi de trames de données (EF, EF_1, EF_2, NEF1, NEF2) à transmettre de l'émetteur au récepteur étant effectuée,
- une multitude de priorités d'au moins trois priorités d'interruption de paires de valeurs différentes étant prédéfinie,
- et, grâce au protocole de communication, une priorité d'interruption de la multitude de priorités étant associée à chaque trame de données (EF, EF_1, EF_2, NEF1, NEF2) d'une liste d'envoi, et la transmission en cours d'une trame de données (NEF1, NEF2) de la liste d'envoi étant interrompue, pour transmettre une trame de données (EF, EF_1, EF_2, NEF1, NEF2) contenue dans la liste d'envoi, à laquelle une priorité d'interruption plus haute que celle de la trame de données en cours de transmission (NEF1, NEF2) est associée,
**caractérisé en ce que**, entre l'émetteur et le récepteur d'une connexion point-à-point des connexions point-à-point, il est convenu de savoir combien de priorités d'interruption différentes sont mises à disposition pour la liste d'envoi de la connexion point-à-point.

2. Procédé selon la revendication 1,
**caractérisé en ce que**, grâce au protocole de communication,
- les données utiles (P) d'une trame de données (NEF1, NEF2) contenue dans une liste d'envoi, à laquelle une priorité d'interruption est associée, laquelle est plus petite que la plus haute priorité d'interruption contenue dans la multitude de priorités, sont réparties avant la transmission de la trame de données sur des parties de trame de données (Fragl, Frag2, Frag3, NEF1 Frag_1, NEF1 Frag_2, NEF1 Frag_3, NEF2 Frag_1, NEF2 Frag_2, NEF2 Frag_3),
- les parties de trame de données (Fragl, Frag2, Frag3, NEF1 Frag_1, NEF1 Frag_2, NEF1 Frag_3, NEF2 Frag_1, NEF2 Frag_2, NEF2 Frag_3) de la trame de données (NEF1, NEF2) sont transmises l'une après l'autre,
- et il est déterminé si la transmission de la trame de données (NEF1, NEF2) est à interrompre en évaluant chaque fois avant l'envoi d'une partie de trame de données (Fragl, Frag2, Frag3, NEF1 Frag_1, NEF1 Frag_2, NEF1 Frag_3, NEF2 Frag_1, NEF2 Frag_2, NEF2 Frag_3) de la trame de données (NEF1, NEF2), si la liste d'envoi contient une trame de données (EF, EF_1, EF_2, NEF1, NEF2) à laquelle est associée une priorité d'interruption plus haute que celle de la trame de données (NEF1, NEF2) de cette partie de trame de données (Fragl, Frag2, Frag3, NEF1 Frag_1, NEF1 Frag_2, NEF1 Frag_3, NEF2 Frag_1, NEF2 Frag_2, NEF2 Frag_3).

3. Procédé selon la revendication 2,
**caractérisé en ce que** chaque partie de trame de données (Fragl, Frag2, Frag3, NEF1 Frag_1, NEF1 Frag_2, NEF1 Frag_3, NEF2 Frag_1, NEF2 Frag_2, NEF2 Frag_3) présente une longueur de trame d'au moins 64 octets.

4. Procédé selon l'une des revendications précédentes,
**caractérisé en ce que**, grâce au protocole de communication,
la transmission d'une trame de données (NEF1, NEF2) d'une liste d'envoi est interrompue,
quand, pendant la transmission de la trame de données (NEF1, NEF2) une trame de données (EF, EF_1, EF_2, NEF1, NEF2) à laquelle une priorité d'interruption plus haute que celle de la trame de données en cours de transmission (NEF1, NEF2) est associée, entre dans la liste d'envoi.

5. Procédé selon la revendication 4,
**caractérisé en ce qu'**un nombre d'octets résiduels minimum est prédéfini, et la transmission d'une trame de données (NEF1, NEF2) d'une liste d'envoi est interrompue uniquement quand un nombre non encore transmis d'octets de données utiles de la trame de données (NEF1, NEF2) dépasse positivement le nombre d'octets résiduels minimum.

6. Procédé selon la revendication 4 ou 5,
**caractérisé en ce qu'**en cas d'interruption de la transmission de la trame de données (NEF1, NEF2) d'une liste d'envoi, une partie de trame de données (Fragl, Frag2, Frag3, NEF1 Frag_1, NEF1 Frag_2, NEF1 Frag_3, NEF2 Frag_1, NEF2 Frag_2, NEF2 Frag_3), contenant les données utiles non encore transmises (P) de la trame de données (NEF1, NEF2), se forme et entre dans la liste d'envoi.

7. Procédé selon l'une des revendications précédentes,
**caractérisé en ce que** les métadonnées de chaque trame de données (NEF1, NEF2), auxquelles une priorité d'interruption est associée, laquelle est plus petite que la plus haute priorité d'interruption contenue dans la multitude de priorités, contiennent la priorité d'interruption associée à la trame de données (NEF1, NEF2) ainsi qu'un numéro de trame caractérisant la trame de données (NEF1, NEF2).

8. Procédé selon l'une des revendications 2 ou 3 ou 6,
**caractérisé en ce que** chaque partie de trame de données (Fragl, Frag2, Frag3, NEF1 Frag_1, NEF1 Frag_2, NEF1 Frag_3, NEF2 Frag_1, NEF2 Frag_2, NEF2 Frag_3) d'une trame de données (NEF1, NEF2) contient des métadonnées, lesquelles contiennent la priorité d'interruption associée à la trame de données (NEF1, NEF2), un numéro de trame caractérisant la trame de données (NEF1, NEF2) et un nombre d'octets de données utiles non encore envoyés de la trame de données (NEF1, NEF2).

9. Procédé selon la revendication 8,
**caractérisé en ce qu'**une adresse multidiffusion (DA_Peer) réservée aux parties de trames de données (Fragl, Frag2, Frag3, NEF1 Frag_1, NEF1 Frag_2, NEF1 Frag_3, NEF2 Frag_1, NEF2 Frag_2, NEF2 Frag_3) est prédéfinie, et les métadonnées de chaque partie de trame de données (Frag2, Frag3, NEF1 Frag_2, NEF1 Frag_3, NEF2 Frag_2, NEF2 Frag_3) suivant une première partie de trame de données (Fragl, NEF1 Frag_1, NEF2 Frag_1) contiennent cette adresse multidiffusion (DA_Peer) prédéfinie comme adresse cible.

10. Procédé selon la revendication 8 ou 9,
**caractérisé en ce que** le récepteur d'une trame de données (NEF1, NEF2) répartie en parties de trame de données (Fragl, Frag2, Frag3, NEF1 Frag_1, NEF1 Frag_2, NEF1 Frag_3, NEF2 Frag_1, NEF2 Frag_2, NEF2 Frag_3) détermine, à l'aide des métadonnées des parties de trame de données (Fragl, Frag2, Frag3, NEF1 Frag_1, NEF1 Frag_2, NEF1 Frag_3, NEF2 Frag_1, NEF2 Frag_2, NEF2 Frag_3) reçues par le récepteur, s'il a reçu toutes les parties de trame de données (Fragl, Frag2, Frag3, NEF1 Frag_1, NEF1 Frag_2, NEF1 Frag_3, NEF2 Frag_1, NEF2 Frag_2, NEF2 Frag_3) de la trame de données (NEF1, NEF2), en déterminant le nombre total des octets de données utiles de toutes les parties de trames de données (Frag_1, Frag2, Frag3, NEF1 Frag_1, NEF1 Frag_2, NEF1 Frag_3, NEF2 Frag_1, NEF2 Frag_2, NEF2 Frag_3) reçues par lui, dont les métadonnées contiennent les mêmes numéros de trame, et en comparant le nombre entier des octets de données utiles (P) de la trame de données (NEF1, NEF2), et **en ce que** le récepteur rassemble les parties de trame de données (Fragl, Frag2, Frag3, NEF1 Frag_1, NEF1 Frag_2, NEF1 Frag_3, NEF2 Frag_1, NEF2 Frag_2, NEF2 Frag_3) reçues par lui, dont les métadonnées contiennent les mêmes numéros de trame, en une trame de données (NEF1, NEF2), après qu'il a reçu toutes les parties de trame de données (Fragl, Frag2, Frag3, NEF1 Frag_1, NEF1 Frag_2, NEF1 Frag_3, NEF2 Frag_1, NEF2 Frag_2, NEF2 Frag_3) d'une trame de données (NEF1, NEF2).

11. Utilisation du procédé selon l'une des revendications précédentes dans un réseau de communication, configuré comme un réseau Éthernet.
